# EUROPEAN PATENT SPECIFICATION

(11) **EP 1 541 898 B1**
(45) Date of publication and mention of the grant of the patent: **03.03.2010**
(21) Application number: 04106428.8
(22) Date of filing: 09.12.2004
(51) Int. Cl.: F16H 47/04

(54) **CVT transmission for motor vehicles, in particular for tractors**
Stufenloses Getriebe für Kraftfahrzeuge, insbesondere für Traktoren
Transmission variable continué pour véhicules automobiles notamment pour tracteurs

(30) Priority: 12.12.2003 IT BO20030748
(43) Date of publication of application: 15.06.2005
(73) Proprietor: CNH Italia S.p.A., 41100 Modena (IT)
(72) Inventor: Sedoni, Enrico, 41100 Modena (IT)
(74) Representative: Vandenbroucke, Alberic

(56) References cited:
- EP-A- 0 577 282
- US-A- 5 129 867
- US-A1- 2003 109 347

## Description

The present invention relates to a CVT transmission for motor vehicles, in particular for farm tractors.

Known CVT transmissions simultaneously use a mechanical power generated by an internal combustion engine, power which is modulated in output towards the differential gear by means of a hydrostatic unit.

However, in known transmissions the running mode shift is achieved by un-meshing a toothed mechanical coupling from a device with which a first transmission ratio is obtained and meshing another toothed mechanical coupling in a device whereby a second transmission ratio is obtained.

The operations of un-meshing from a first device and the subsequent meshing in the other transmission device are purely mechanical and they must be done in such a way as to take place at the moment of synchronism, i.e. when the toothed mechanical coupling has the same speed as the transmission device into which it is to be inserted.

In case of an imperfect synchronisation, the teeth of the toothed mechanical coupling could be severely damaged and the operator would have the unpleasant feeling, also in terms of noise, that the transmission ratio shift did not take place correctly.

Mechanical couplings of the above type are shown in US-A-5.129.867 (corresponding to the preamble of claim 1).

US 2003/0109347 A1 relies on another type of clutches, comparable with plate clutches. This transmission however suffers from the disadvantage that five clutches are needed to obtain all available gear ratios, making the arrangement complex and expensive.

The object of the present invention therefore is to provide a CVT transmission that is free from the drawbacks described above.

Therefore, according to the present invention a CVT transmission for motor vehicles, in particular for farm tractors, is provided, as defined by the characteristics of claim 1.

Further features of the invention are disclosed in the dependent claims.

The present invention will now be described with reference to the accompanying drawings, which illustrate a non-limiting embodiment thereof, in which:
- Figure 1 schematically shows a CVT transmission of the present invention in a first condition (meshing of the first forward running mode);
- Figure 2 schematically shows the CVT transmission of the present invention in a second condition (meshing of the second forward running mode);
- Figure 3 schematically shows the CVT transmission of the present invention in a third condition (meshing of the third forward running mode);
- Figure 4 schematically shows the CVT transmission of the present invention in a fourth condition (meshing of the fourth forward running mode); and
- Figure 5 schematically shows a CVT transmission of the present invention in a fifth condition (meshing of the reverse running mode).

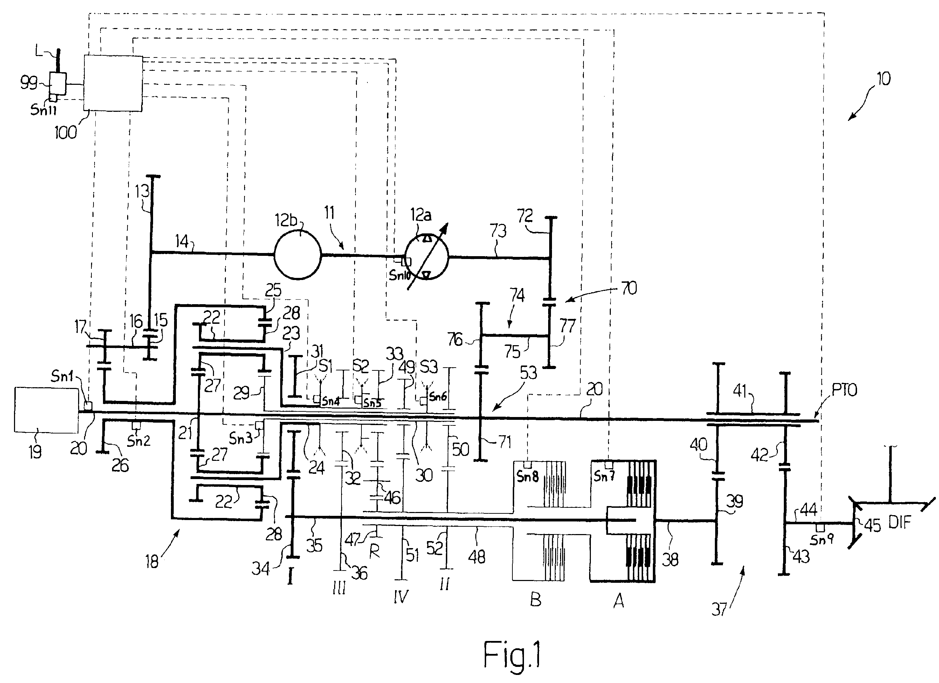

In Figure 1, the reference 10 globally designates a CVT transmission of the present invention in a first condition of engagement thereof, i.e. when the first forward running mode (I) is engaged (see below).

More specifically, as known in the art, the transmission 10 comprises a hydrostatic unit 11, in turn comprising a variable displacement pump 12a operatively connected to a fixed displacement motor 12b. In known fashion, the output of the variable displacement pump 12a can be adjusted by means of a swash plate (not shown) of which the position is controlled by electronic means better described below.

The hydrostatic unit 11, in dependence of adjustment means better explained below, is operable to drive a gear wheel 13 keyed onto a transmission shaft 14. The gear wheel 13 meshes with a further gear wheel 15 keyed onto a shaft 16 to which another gear wheel 17 is fixedly attached. This arrangement of gears is operable to send the regulating motion generated by the hydrostatic unit 11 towards an epicyclic rotary mechanism globally designated by the number 18 (see below).

An internal combustion engine 19 drives a drive shaft 20 mechanically connected directly, in traditional fashion, with a PTO of the tractor. Moreover, the drive shaft 20 drives parts of the epicyclic rotary mechanism 18. More particularly, the epicyclic rotary mechanism 18 comprises, in known fashion, a first sun gear 21 keyed directly onto the drive shaft 20. The first sun gear 21 meshes with a plurality of planet gears or satellites positioned, in conventional manner, around the first sun gear 21 (in Figure 1, only two planet gears 22 are shown).

The epicyclic rotary mechanism 18 further comprises a spider 23 carrying the planet gears 22 and extending into a hollow shaft 24. A ring wheel 25 is operatively connected with the aforesaid gear wheel 17 through another gear wheel 26 whereby the hydrostatic unit 11 is mechanically connected with the epicyclic rotary mechanism 18.

It will be observed that the first sun gear 21 meshes with gear wheels 27 of the planet gears 22, whereas the gear wheels 28 of the satellites 22 simultaneously mesh with the ring 25 and with a second sun gear 29. As shown in the accompanying figures, the second sun gear 29 is keyed onto a transmission shaft 30.

In summary, motion enters the epicyclic rotary mechanism 18 from the first sun gear 21 by means of the drive shaft 20, rotating with an angular speed imposed by the internal combustion engine 19, and from the ring wheel 25 rotated through the engagement of the gear wheel 26 with 17(motion imposed by the hydrostatic unit 11).

As mentioned above, modulating the angular velocity of the gear wheel 17 by means of the hydrostatic unit 11, the output speed of the epicyclic rotary mechanism 18 can be modulated.

The two output elements from the epicyclic rotary mechanism 18 are the spider 23, with the related transmission shaft 24, and the second sun gear 29 integral with the drive shaft 30. Incidentally, the hollow shaft 30 is inserted coaxially within the shaft 24, which is also hollow. In turn, the drive shaft 20 is housed within the shaft 30, which, as stated, is also hollow. Thus, in other words, the three shafts 20, 30 and 24 are mutually coaxial and inserted one inside the other.

As shown in the accompanying drawings, the shaft 24 bears three idle gear wheels 31, 32 and 33. Furthermore, a first bi-directional synchroniser S1 and a second monodirectional synchroniser S2 are fixedly connected to the shaft 24. The synchroniser S1 is positioned between the gear wheels 31 and 32 and is able to connect, in selective manner, either the gear wheel 31 or the gear wheel 32 to the shaft 24. In turn, the synchroniser S2 is operable, in selective fashion, to fixedly connect the gear wheel 33 to the transmission shaft 24, in a manner that will become more readily apparent below.

The gear wheel 31 permanently meshes with a gear wheel 34 keyed onto a transmission shaft 35 mechanically connected with a first clutch A. Similarly, the gear wheel 32 permanently meshes with a gear wheel 36 also keyed onto the shaft 35. The shaft 35 extends parallel to the shafts 20, 24 and 30.

Incidentally, the shafts 24, 30 are generally in rotation for almost any condition of travel, since they take motion directly from the drive shaft 20. However, it is necessary to specify that the shaft 24 in some conditions of travel reaches zero speed.

The clutch A is mechanically connected to a differential gear DIF by means of a motion transferring unit 37. The unit 37 comprises a shaft 38, integral with the output side of the clutch A, whereon a gear wheel 39 is fixedly connected. The gear wheel 39 meshes with a gear wheel 40 fastened to a hollow shaft 41 traversed by the drive shaft 20, which, as stated, sets the PTO in rotation. The shaft 41 further comprises a fixedly connected gear wheel 42 which meshes with a gear wheel 43 integral with a mechanical connection shaft 44 with a pinion 45 of the differential gear DIF. The presence of the motion transfer unit 37 is not indispensable and the clutch A could be connected directly to the differential DIF.

The gear wheel 33, which, as already mentioned, is normally idle on the shaft 24, meshes with an idle gear 46, which, in turn, also meshes with a gear wheel 47 fixedly connected to a hollow transmission shaft 48 through which passes the aforesaid transmission shaft 35. As will be seen, the idle wheel 46 serves the purpose of inverting the sense of rotation of the gear wheel 47 to obtain the desired reverse running mode (see below).

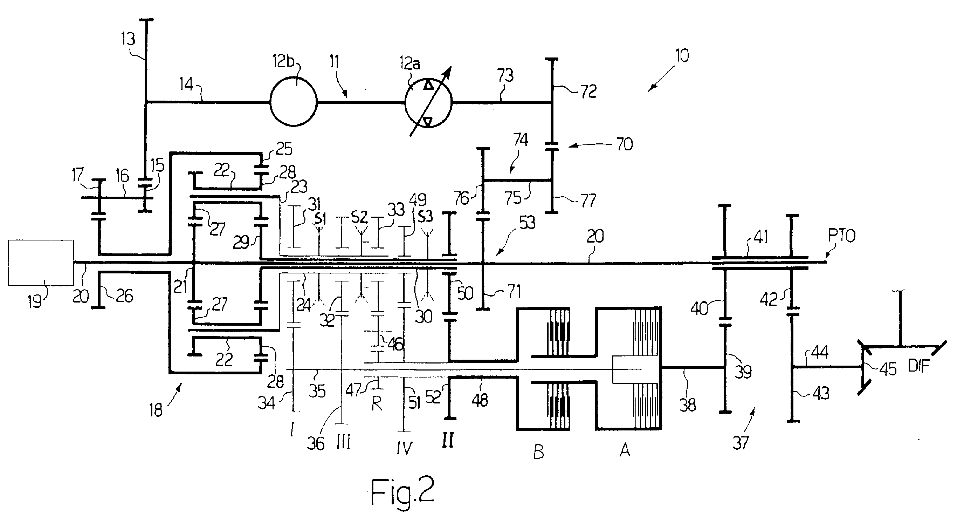

A second clutch B, mechanically connected to the transmission shaft 48, is operable to transmit motion to the unit 37, and hence, finally, to the differential gear DIF. The clutch B is positioned "upstream" of the clutch A and, as shown for example in Figure 2, the clutches A and B are constructed such that when the clutch B is closed, motion from the epicyclic rotary mechanism 18 is transmitted to an external housing portion of the clutch A. In as much as this external housing portion is connected to shaft 38, there is a continuity of the transmission towards the differential gear DIF.

Two idle gear wheels 49 and 50 are mounted on the transmission shaft 30. A third bi-directional synchroniser S3, integral with the shaft 30, is inserted inbetween the gear wheels 49 and 50. The gear wheels 49, 50 respectively mesh with gear wheels 51 and 52, both integrally connected with the connection shaft 48, in turn connected to the outer housing of the second clutch B.

Summarising, the gear wheels 31, 34, 32, 36, 33, 46, 47, 49, 51, 50, 52; the shafts 20, 24, 30, 35, 48; the synchronisers S1, S2, S3; and the clutches A and B globally constitute a gearbox 53.

As shown in the accompanying drawings, to set the impeller (not shown) of the pump 12a of the hydraulic unit 11 in rotation, a transmission unit 70 is employed comprising a gear wheel 71 keyed onto the drive shaft 20, and a gear wheel 72 integral with a shaft 73 mechanically connected to the pump 12a. To transmit the motion from the gear wheel 71 to the gear wheel 72, a transmission device 74 is provided comprising, in turn, a shaft 75 having a first gear wheel 76 meshing with the gear wheel 71 and a second gear wheel 77 meshing with the gear wheel 72.

It is readily apparent for those skilled in the art that instead of the device 74 and of the pair of gear wheels 71, 72 it is possible to use any device for transmitting motion between the drive shaft 20 and the shaft 73.

Figure 1 further shows a manual control 99 actuated by an operator who, through a lever L, imparts commands to the transmission 10 to determine the engaged gear of the motor vehicle. The lever L is connected to an electronic unit 100, which manages the signals measured by a series of sensors Sn. In particular, Sn1 is the sensor that measures the angular speed of the transmission shaft 20, whilst Sn2 measures the angular speed of the ring wheel 25 of the epicyclic rotary mechanism 18. Sn3 controls the speed of rotation of the second sun gear 29, whilst Sn4, Sn5, and Sn6 are sensors that respectively control the position of the synchronisers S1, S2, S3. To move the synchronisers S1, S2, S3, respective actuators (not shown) are provided.

Two sensors Sn7 and Sn8 control the engagement, or disengagement, respectively, of the clutches A and B. The sensor Sn9 measures the angular speed of the shaft 44, whilst the sensor Sn10 controls the operating conditions of the pump 12 of the hydraulic unit 11. Lastly, the sensor Sn11 detects the command imparted by the operator through the lever L.

As will become more readily apparent in the description of the operation of the transmission 10 of the present invention, the unit 100 sets the general conditions of operation of the hydraulic unit 11, of the synchronisers S1, S2, S3 and of the clutches A and B in such a way as to have a condition of travel of the motor vehicle corresponding to the commands imparted by the operator by means of the lever L, obviously taking the values measures by the sensors Sn appropriately into account.

As shown in the accompanying drawings, the transmission of the motion through the gear wheels 31, 34 achieves the first forward running mode (I), whilst the transmission of the motion by means of the gear wheels 32 and 36 achieves the third forward running mode (III).

By means of the transmission of the motion with the train of gear wheels 33, 46 (idle wheel, for reversing the direction of rotation) and 47, the reverse running mode (R) is obtained.

With regard to the second forward running mode (II) and the fourth forward running mode (IV), they are obtained in the transmission by means of the coupling between the gear wheels 50, 52 and, respectively, the gear wheels 49 and 51.

The operation of the CVT transmission 10 of the present invention is the following.

Assuming that the tractor is in the condition of first forward running mode (I), as shown in Figure 1, the synchroniser S1 acts on the gear wheel 31 to make it integral with the shaft 24. The mechanical power, generated by the internal combustion engine 19, is sent to the gear wheel 34 through the epicyclic rotary mechanism 18, which sets the transmission shaft 35 in rotation. The first clutch A is closed (whilst the second clutch B is open), so the mechanical power is transmitted through the clutch A to the shaft 38, to the unit 37 and hence to the differential gear DIF.

If the operator, through the lever L, sends a signal to the electronic unit 100 to increase the speed of the vehicle to a value obtainable only in second running mode (II), the synchroniser S3 acts on the gear wheel 50 to make it integral with the transmission shaft 30. This action sets the gear wheel 52 into rotation, and as it meshes with the gear wheel 50, also the transmission shaft 48 starts to rotate. No power is transmitted to the differential gear DIF however because the related clutch B is still open.

The system knows that it must shift running modes (in the present situation from first to second) in the optimal conditions, so the hydraulic unit 11, acting on the ring wheel 25 of the epicyclic rotary mechanism 18, sets the transmission shaft 24, and hence the gear wheel 31, into rotation, towards the maximum limit of the first forward running mode (I). It is readily apparent for those skilled in the art that the speed of rotation of the shafts 24 and 30 can be regulated exploiting the peculiarities of the epicyclic rotary mechanism 18 and the well known Willis formulas.

At this point, the electronic unit 100 commands the closure of the second clutch B and the opening of the first clutch A. Therefore, mechanical power will be transmitted from the engine 19 to the differential gear DIF passing through the shaft 30, the pair of gear wheels 50, 52, the shaft 48, the closed clutch B (whilst the friction A, as stated, is opened by the system), the shaft 30 and the unit 37. The condition of the transmission in the second running mode is the one shown in Figure 2. It should be stressed that the opening and closing operations (or vice versa) of the clutch A and of the clutch B must be performed by the system in gradual and proportional fashion, in order to have the "smoothest" possible running mode shift.

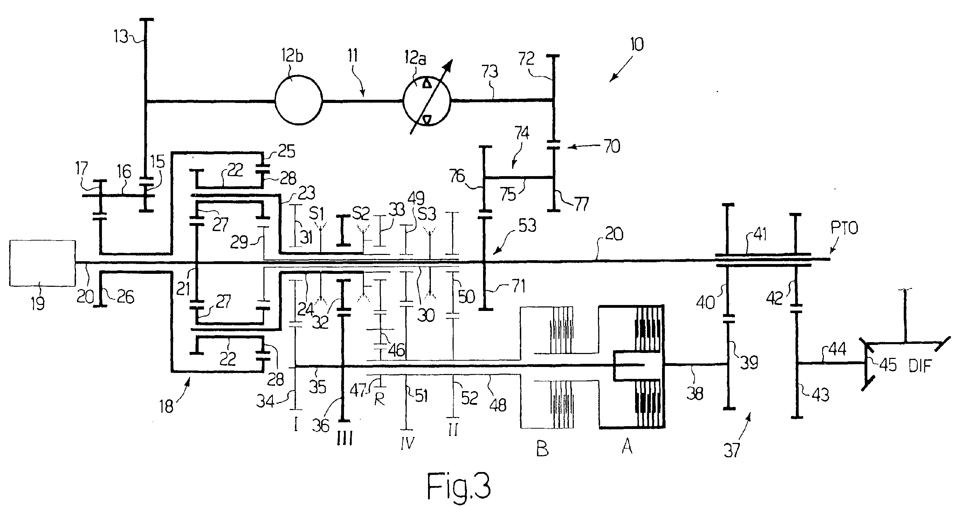

The shift to the third forward running mode (III) is shown in Figure 3 and it takes place substantially in a comparable manner as described above for the shift from the first running mode (I) to the second running mode (II). In particular, to obtain the third forward running mode (III) (Figure 3), the synchroniser S1 disconnects from the gear wheel 31 (of the first running mode (I)) and acts on the gear wheel 32 to make it integral with the shaft 24. The motion is therefore transmitted to the gear wheel 36, which, by means of the closed clutch A (the clutch B is open; see Figure 3) transmits power to the differential gear DIF;

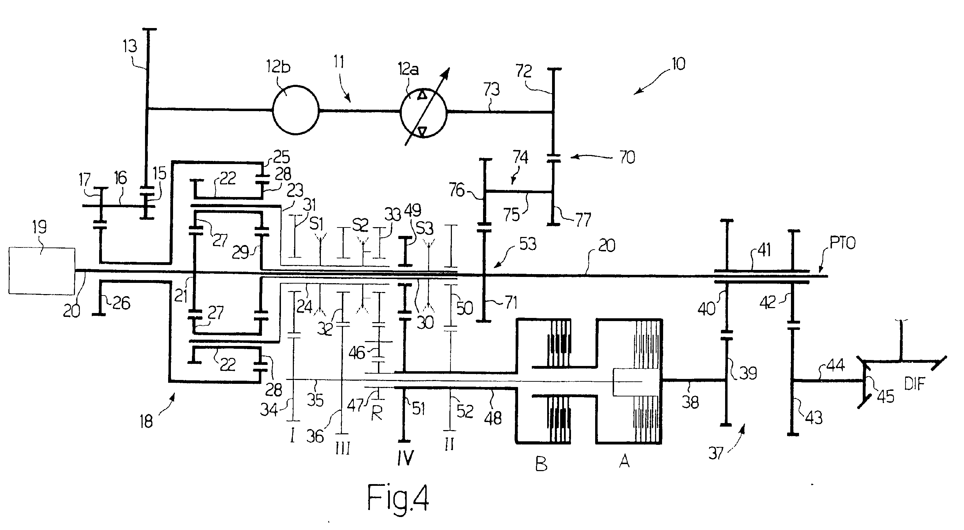

The shift from the third forward running mode (III) to the fourth forward running mode (IV) is shown in Figure 4 and is completely similar to the running mode shifts described above. Clearly, every time the shift is made from a lower running mode to a higher running mode, the unit 100 causes the hydraulic unit 11 to bring the speed of rotation of the output shaft towards a level equal with the highest speed obtainable by the lower running mode. Similarly, when the system has to shift from a higher running mode to a lower running mode, for example from the third forward running mode (III) to the second forward running mode (II), the unit 100 imparts such commands as to cause the output shaft to assume the lower speed before the running mode shift is actually achieved in the manners described above.

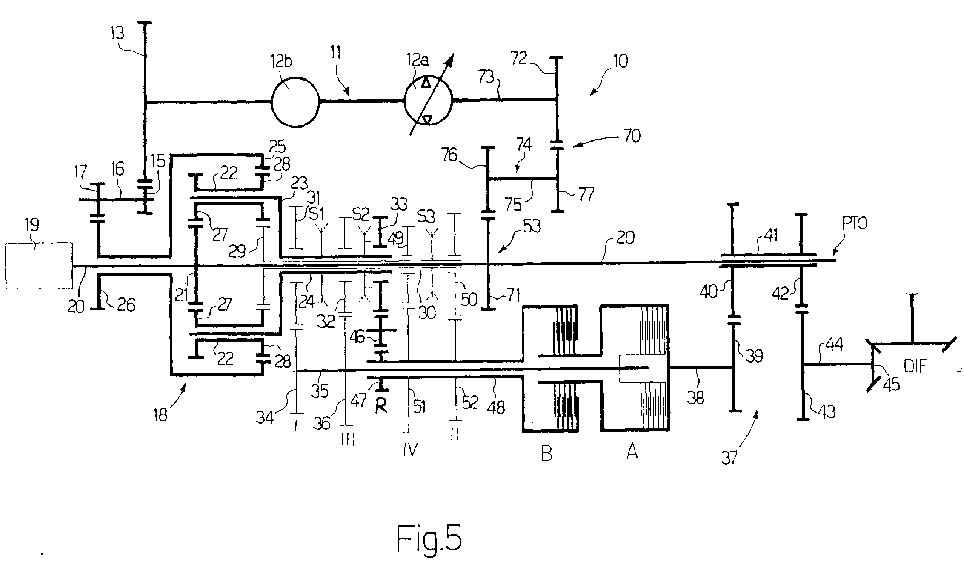

Similarly, to engage the reverse running mode (R), the system will disengage the synchronisers S1 and S3, idling the gear wheels 31, 32 and 49, 50 from the respective shafts 24 and 30, whilst the synchroniser S2 acts on the gear wheel 33 to make it integral with the transmission shaft 24. As such, the motion is transmitted to the gear wheels 46 and 47 and from there onwards to the shaft 48 and to the closed clutch (B), as shown in Figure 5. The presence of the idle wheel 46 causes a rotation in the opposite direction of the pinion 45 of the differential gear DIF, thereby achieving the desired reverse running gear (R). It is clear that in this case the system will be able to shift running gears gradually to the first forward running mode (I) and to zero speed, then shift to reverse running mode (R), or alternatively, it will be able to shift directly from the first running mode (I) to the reverse running mode (R) through the direct actuation of the related clutches A, B.

In other words, in the CVT transmission 10 of the present invention it is possible to pre-synchronise a running mode before actually shifting running modes. Moreover, the pre-selection logic of the plurality of synchronisers S1, S2, S3 and the modulated engagement/disengagement of the two friction clutches (A, B) allows to pass from one range to another also in conditions of imperfect rpm synchronism (as a result of the presence of the friction clutches), considerably simplifying the electronic control of the system.

The advantages of the present CVT transmission can be summarised as follows:
- Reversal of motion from the first forward running mode (I) to the reverse running mode (R) is achieved mechanically, by opening one clutch and closing the other (instead of in purely hydrostatic fashion), with a consequent simplification of the operation of the system; and
- Pre-synchronisation of the next running mode before actually making the shift, results in a smoother shifting process. Since it is possible to pre-synchronise the reverse running mode (R) at any time while travelling forward, a smooth running mode shift can be effected just by acting on the clutches A and B.

## Claims

1. A CVT transmission (10) for a motor vehicle, in particular an agricultural tractor, comprising a hydraulic unit (11), an epicyclic rotary mechanism (18) having a first shaft (24) and a second shaft (30) at the output of said mechanism (18), a gearbox (53) and a differential gear (DIF), whereby said gearbox (53) comprises:
a first plurality of gear wheels (31, 32, 33) and a second plurality of gear wheels (49, 50) idly mounted respectively on said first shaft (24) and said second shaft (30);
- a plurality of synchronisers (S1, S2), able to render said first plurality of gear wheels (31, 32, 33) selectively integral with the respective first shaft (24);
- a synchroniser (S3), able to render said second plurality of gear wheels (49,50) selectively integral with the respective second shaft (30);
- a third plurality of gear wheels (34, 36), keyed onto a third shaft (35) and a fourth plurality of gear wheels (47, 51, 52) keyed onto a fourth shaft (48);
- a first clutch (A), mechanically connected with said third shaft (35) and a second clutch (B), mechanically connected with said fourth shaft (48); **characterized by** the arrangement being such that by the selective engagement of said synchronisers (S1, S2 ; S3) making said first plurality of gear wheels (31, 32, 33) and said second plurality of gear wheels (49, 50) selectively integral with, respectively, said first shaft (24) and said second shaft (30), and by the selective actuation of said first clutch (A) or said second clutch (B), all the running modes (I, II, III, IV, R) provided in said gearbox (53) are obtainable;
the first clutch (A) and the second clutch (B) being arranged in series and mechanically connected to each other and to the differential gear (DIV) in such a way that, when the second clutch (B) is closed and the first clutch (A) is opened, at least one part of the first clutch (A) is set in rotation to transmit motion to the differential gear (DIF) through the closed second clutch (B).

2. A CVT transmission according to claim 1, **characterized in that,** when a first gear wheel (31) of said first plurality of gear wheels is integral with the first shaft (24), motion is transmitted to the differential gear (DIF) through a first gear wheel (34) of said third plurality of gear wheels integral with the third shaft (35); the first clutch (A), mechanically connected to the third shaft (35), being closed to obtain the first forward running mode (I).

3. A CVT transmission according to claim 1 or 2, **characterized in that,** when a first gear wheel (50) of said second plurality of gear wheels is integral with the second shaft (30), motion is transmitted to the differential gear (DIF) through a first gear wheel (52) of said fourth plurality of gear wheels integral with the fourth shaft (48); the second clutch (B), mechanically connected to the fourth shaft (48), being closed to obtain the second forward running mode (II).

4. A CVT transmission according to any of the preceding claims, **characterized in that,** when a second gear wheel (32) of said first plurality of gear wheels is integral with the first shaft (24), motion is transmitted to the differential gear (DIF) through a second gear wheel (36) of said third plurality of gear wheels integral with the third shaft (35); the first clutch (A), mechanically connected to the third shaft (35), being closed to obtain the third forward running mode (III).

5. A CVT transmission according to any of the preceding claims, **characterized in that,** when a second gear wheel (49) of said second plurality of gear wheels is integral with the second shaft (30), motion is transmitted to the differential gear (DIF) through a second gear wheel (51) of said fourth plurality of gear wheels integral with the fourth shaft (48); the second clutch (B), mechanically connected to the second shaft (48), being closed to obtain the fourth forward running mode (IV).

6. A CVT transmission according to any of the preceding claims, **characterized in that,** when a third gear wheel (33) of said first plurality of gear wheels is integral with the first shaft (24), motion is transmitted to the differential gear (DIF) through an idle gear wheel (46) meshing with a third gear wheel (47) of said fourth plurality of gear wheels integral with the fourth shaft (48); the second clutch (B), mechanically connected to the fourth shaft (48), being closed to obtain the reverse running mode (R).

7. A CVT transmission according to claims 2 or 6, **characterized in that** said first gear wheel (31) of the first forward running mode (I) and said third gear wheel (33) of the reverse running mode (R) are selectively connectable to said first shaft (24); said first shaft being integral with a spider member (23) of the epicyclic rotary mechanism (18).

8. A CVT transmission according to claim 7, **characterized in that** said first gear wheel (31) of said first plurality of gear wheels, supported by said first shaft (24), meshes with said first gear wheel (34) of said third plurality of gear wheels integral with the third shaft (35); said third shaft (35) being mechanically connected to the first clutch (A); and **in that** said third gear wheel (33) of said first plurality of gear wheels, supported by the first shaft (24) meshes with said idle wheel (46); said idle wheel (46) in turn meshing with said third gear wheel (47) of said fourth plurality of gear wheels integral with said fourth shaft (48) mechanically connected with the second clutch (B).

9. A CVT transmission according to claim 8, **characterized in that** a switch between the first forward running mode (I) and the reverse running mode (R) is effected by opening one of said first and second clutches (A, B) and closing the other.

10. A CVT transmission according to any of the preceding claims, **characterized in that** the first and second shafts (24, 30) have the same axis of longitudinal symmetry; the second shaft (30) being positioned inside the first, hollow shaft (24).

11. A CVT transmission according to claim 10, **characterized in that** a fifth shaft (20), coupled to the output of an internal combustion engine (19) of the vehicle, traverses the first, hollow shaft (24) to actuate a remote power take-off (PTO) mechanism.

12. A CVT transmission according to any of the preceding claims, **characterized in that** the speed setting of the motor vehicle is regulated by an electronic unit (100) which receives the signals selected by an operator through control means (L) as a function of parameters measured by means of a variety of sensors (Sn1-Sn11).

13. A CVT transmission according to any of the preceding claims, **characterized in that** said gearbox (53) is connected to the output side of said epicyclic rotary mechanism (18); said first and second clutches (A, B) being located at the output side of said gearbox (53) inbetween said gearbox (53) and said differential gear (DIF).

## Patentansprüche

1. CVT- (stufenloses Automatik-) Getriebe (10) für ein Motorfahrzeug, insbesondere einen landwirtschaftlichen Traktor, mit einer Hydraulikeinheit (11), einem Planetengetriebe-Mechanismus (18), der eine erste Welle (24) und eine zweite Welle (30) am Ausgang des Mechanismus (18) aufweist, einem Getriebe (53) und einem Differenzialgetriebe (DIF), wobei das Getriebe (53) Folgendes umfasst:
- eine erste Mehrzahl von Zahnrädern (31, 32, 33) und eine zweite Mehrzahl von Zahnrädern (49, 50), die freilaufend auf der ersten Welle (24) bzw. der zweiten Welle (30) befestigt sind;
- eine Mehrzahl von Synchronisiereinrichtungen (S1, S2) die in der Lage sind, die erste Mehrzahl von Zahnrädern (31, 32, 33) selektiv einstückig mit der jeweiligen ersten Welle (24) zu machen;
- eine Synchronisiereinrichtung (S3), die in der Lage ist, die zweite Mehrzahl von Zahnrädern (49, 50) selektiv einstückig mit der jeweiligen zweiten Welle (30) zu machen;
- eine dritte Mehrzahl von Zahnrädern (34, 36), die auf eine dritte Welle (35) aufgekeilt sind, und eine vierte Mehrzahl von Zahnrädern (47, 51, 52), die auf eine vierte Welle (48) aufgekeilt sind;
- eine erste Kupplung (A), die mechanisch mit der dritten Welle (35) verbunden ist, und eine zweite Kupplung (B), die mechanisch mit der vierten Welle (48) verbunden ist;
**dadurch gekennzeichnet, dass** die Anordnung derart ist, dass durch das selektive Einschalten der Synchronisiereinrichtungen (S1, S2; S3), durch das die erste Mehrzahl von Zahnrädern (31, 32, 33) und die zweite Mehrzahl von Zahnrädern (49, 50) selektiv einstückig mit der ersten Welle (24) bzw. der zweiten Welle (30) gemacht wird, und durch die selektive Betätigung der ersten Kupplung (A) oder der zweiten Kupplung (B) alle die Betriebsarten (I, II, III, IV, R), die in dem Getriebe (53) vorgesehen sind, erzielbar sind; wobei die erste Kupplung (A) und die zweite Kupplung (B) in Serie angeordnet und mechanisch miteinander und mit dem Differenzialgetriebe (DIF) in einer derartigen Weise verbunden sind, dass wenn die zweite Kupplung (B) geschlossen und die erste Kupplung (A) geöffnet wird, zumindest ein Teil der ersten Kupplung (A) in Drehung versetzt wird, um eine Bewegung auf das Differenzialgetriebe (DIF) über die geschlossene zweite Kupplung (B) zu übertragen.

2. CVT-Getriebe nach Anspruch 1, **dadurch gekennzeichnet, dass** wenn ein erstes Zahnrad (31) der ersten Mehrzahl von Zahnrädern einstückig mit der ersten Welle (24) ist, eine Bewegung auf das Differenzialgetriebe (DIF) über ein erstes Zahnrad (34) der dritten Mehrzahl von Zahnrädern übertragen wird, das einstückig mit der dritten Welle (35) verbunden ist; wobei die erste Kupplung (A), die mechanisch mit der dritten Welle (35) verbunden ist, geschlossen wird, um die erste Vorwärts-Betriebsart (I) zu erzielen.

3. CVT-Getriebe nach Anspruch 1 oder 2, **dadurch gekennzeichnet, dass** wenn ein erstes Zahnrad (50) der zweiten Mehrzahl von Zahnrädern einstückig mit der zweiten Welle (30) ist, eine Bewegung auf das Differenzialgetriebe (DIF) über ein erstes Zahnrad (52) der vierten Mehrzahl von Zahnrädern übertragen wird, das einstückig mit der vierten Welle (48) verbunden ist; wobei die zweite Kupplung (B), die mechanisch mit der vierten Welle (48) verbunden ist, geschlossen ist, um die zweite Vorwärts-Betriebsart (II) zu erzielen.

4. CVT-Getriebe nach einem der vorhergehenden Ansprüche, **dadurch gekennzeichnet, dass** wenn ein zweites Zahnrad (32) der ersten Mehrzahl von Zahnrädern einstückig mit der ersten Welle (24) ist, eine Bewegung auf das Differenzialgetriebe (DIF) über ein zweites Zahnrad (36) der dritten Mehrzahl von Zahnrädern übertragen wird, das einstückig mit der dritten Welle (35) ist; wobei die erste Kupplung (A), die mechanisch mit der dritten Welle (35) verbunden ist, geschlossen ist, um die dritte Vorwärts-Betriebsart (III) zu erzielen.

5. CVT-Getriebe nach einem der vorhergehenden Ansprüche, **dadurch gekennzeichnet, dass** wenn ein zweites Zahnrad (49) der zweiten Mehrzahl von Zahnrädern einstückig mit der zweiten Welle (30) ist, eine Bewegung auf das Differenzialgetriebe (DIF) durch ein zweites Zahnrad (51) der vierten Mehrzahl von Zahnrädern übertragen wird, das einstückig mit der vierten Welle (48) verbunden ist; wobei die zweite Kupplung (B), die mechanisch mit der zweiten Welle (48) verbunden ist, geschlossen ist, um die vierte Vorwärts-Betriebsart (IV) zu erzielen.

6. CVT-Getriebe nach einem der vorhergehenden Ansprüche, **dadurch gekennzeichnet, dass** wenn ein drittes Zahnrad (31) der ersten Vielzahl von Zahnrädern einstückig mit der ersten Welle (24) ist, eine Bewegung auf das Differenzialgetriebe (DIF) über ein Leerlaufzahnrad (46) übertragen wird, das mit dem dritten Zahnrad (47) der vierten Mehrzahl von Zahnrädern kämmt, das einstückig mit der vierten Welle (48) ist, wobei die zweite Kupplung (B), die mechanisch mit der vierten Welle (48) verbunden ist, geschlossen ist, um die Rückwärts-Betriebsart (R) zu erzielen.

7. CVT-Getriebe nach den Ansprüchen 2 oder 6, **dadurch gekennzeichnet, dass** das erste Zahnrad (31) der ersten Vorwärts-Betriebsart (I) und das dritte Zahnrad (33) der Rückwärts-Betriebsart (R) selektiv mit der ersten Welle (24) verbindbar sind; wobei die erste Welle einstückig mit einem Planetenrad (53) des Planetengetriebe-Mechanismus (18) verbunden ist.

8. CVT-Getriebe nach Anspruch 7, **dadurch gekennzeichnet, dass** das erste Zahnrad (31) der ersten Mehrzahl von Zahnrädern, das durch die erste Welle (24) gelagert sind, mit dem ersten Zahnrad (34) der dritten Mehrzahl von Zahnrädern kämmt, die einstückig mit der dritten Welle (35) sind; wobei die dritte Welle (35) mechanisch mit der ersten Kupplung (A) verbunden ist; und dass das dritte Zahnrad (33) der ersten Mehrzahl von Zahnrädern, das durch die erste Welle (24) gelagert ist, mit dem Leerlaufzahnrad (46) kämmt; wobei das Leerlaufzahnrad (46) seinerseits mit dem dritten Zahnrad (47) der vierten Mehrzahl von Zahnrädern kämmt, das einstückig mit der vierten Welle (48) ist, die mechanisch mit der zweiten Kupplung (B) verbunden ist.

9. CVT-Getriebe nach Anspruch 8, **dadurch gekennzeichnet, dass** ein Schalten zwischen der ersten Vorwärts-Betriebsart (I) und der Rückwärts-Betriebsart (R) durch Öffnen einer der ersten und zweiten Kupplungen (A, B) und Schließen der anderen bewirkt wird.

10. CVT-Getriebe nach einem der vorhergehenden Ansprüche, **dadurch gekennzeichnet, dass** die ersten und zweiten Wellen (24, 30) die gleiche Längs-Symmetrieachse haben; wobei die zweite Welle (30) im Inneren der ersten Hohlwelle (24) angeordnet ist.

11. CVT-Getriebe nach Anspruch 10, **dadurch gekennzeichnet, dass** eine fünfte Welle (20), die mit dem Ausgang eines Verbrennungsmotors (19) des Fahrzeuges gekoppelt ist, die erste Hohlwelle (24) durchquert, um einen entfernt angeordneten Zapfwellen- (PTO-) Mechanismus zu betätigen.

12. CVT-Getriebe nach einem der vorhergehenden Ansprüche, **dadurch gekennzeichnet, dass** die Drehzahleinstellung des Motorfahrzeuges durch eine elektronische Einheit (100) geregelt ist, die die von einem Fahrer über eine Steuereinrichtung (L) ausgewählten Signale als eine Funktion der Parameter empfängt, die mit Hilfe einer Vielzahl von Sensoren (Sn1-Sn11) gemessen werden.

13. CVT-Getriebe nach einem der vorhergehenden Ansprüche, **dadurch gekennzeichnet, dass** das Getriebe (53) mit der Ausgangsseite des Planetengetriebe-Mechanismus (18) verbunden ist; wobei die ersten und zweiten Kupplungen (A, B) an der Ausgangsseite des Getriebes (53) zwischen dem Getriebe (53) und dem Differenzialgetriebe (DIF) liegen.

## Revendications

1. Transmission à variation continue (CVT) (10) pour un véhicule à moteur, en particulier un tracteur agricole, comprenant un bloc hydraulique (11), un mécanisme rotatif épicycloïdal (18) comportant un premier arbre (24) et un second arbre (30) à la sortie du dit mécanisme (18), une boîte de vitesses (53) et un différentiel (DIF), dans laquelle ladite boîte de vitesses (53) comprend :
- une première pluralité de pignons (31, 32, 33) et une seconde pluralité de pignons (49, 50) montés en pignon fou respectivement sur ledit premier arbre (24) et ledit second arbre (30),
- une pluralité de synchroniseurs (S1, S2), capables de rendre ladite pluralité de pignons (31, 32, 33) sélectivement solidaires avec le premier arbre respectif (24),
- un synchroniseur (S3), capable de rendre ladite seconde pluralité de pignons (49, 50) sélectivement solidaires avec le second arbre respectif (30),
- une troisième pluralité de pignons (34, 36), calés sur un troisième arbre (35) et une quatrième pluralité de pignons (47, 51, 52) calés sur un quatrième arbre (48),
- un premier embrayage (A), mécaniquement relié au dit troisième arbre (35) et un second embrayage (B), mécaniquement relié au dit quatrième arbre (48),
**caractérisée en ce que** l'agencement est tel que, par l'engagement sélectif des dits synchroniseurs (S1, S2, S3) rendant ladite première pluralité des pignons (31, 32, 33) et ladite seconde pluralité des pignons (49, 50) sélectivement solidaires avec, respectivement, le dit premier arbre (24) et ledit second arbre (30), et par la commande sélective du dit premier embrayage (A) ou du dit second embrayage (B), on peut obtenir tous les modes de marche (I, II, III, IV, R) prévus dans ladite boîte de vitesses (53), le premier embrayage (A) et le second embrayage (B) étant disposés en série et reliés mécaniquement l'un à l'autre et au différentiel (DIF) de telle sorte que, lorsque le second embrayage (B) est fermé et le premier embrayage (A) est ouvert, au moins une partie du premier embrayage (A) est mise en rotation pour transmettre le mouvement au différentiel (DIF) par l'intermédiaire du second embrayage fermé (B).

2. Transmission à variation continue (CVT) selon la revendication 1, **caractérisée en ce que**, lorsqu'un premier pignon (31) de ladite première pluralité de pignons est solidaire avec le premier arbre (24), le mouvement est transmis vers le différentiel (DIF) par l'intermédiaire d'un premier pignon (34) de ladite troisième pluralité de pignons solidaires avec le troisième arbre (35) ; le premier embrayage (A), mécaniquement relié au troisième arbre (35), étant fermé pour obtenir le premier mode de marche avant (I).

3. Transmission à variation continue (CVT) selon la revendication 1 ou 2, **caractérisée en ce que,** lorsqu'un premier pignon (50) de ladite seconde pluralité de pignons est solidaire avec le second arbre (30), le mouvement est transmis vers le différentiel (DIF) par l'intermédiaire d'un premier pignon (52) de ladite quatrième pluralité de pignons solidaires avec le quatrième arbre (48) ; le second embrayage (B), mécaniquement relié au quatrième arbre (48), étant fermé pour obtenir le second mode de marche avant (II).

4. Transmission à variation continue (CVT) selon l'une quelconque des revendications précédentes, **caractérisée en ce que,** lorsqu'un second pignon (32) de ladite première pluralité de pignons est solidaire avec le second premier arbre (24), le mouvement est transmis vers le différentiel (DIF) par l'intermédiaire d'un second pignon (36) de ladite troisième pluralité de pignons solidaires avec le troisième arbre (35) ; le premier embrayage (A), mécaniquement relié au troisième arbre (35), étant fermé pour obtenir le troisième mode de marche avant (III).

5. Transmission à variation continue (CVT) selon l'une quelconque des revendications précédentes, **caractérisée en ce que,** lorsqu'un second pignon (49) de ladite seconde pluralité de pignons est solidaire avec le second premier arbre (30), le mouvement est transmis vers le différentiel (DIF) par l'intermédiaire d'un second pignon (51) de ladite quatrième pluralité de pignons solidaires avec quatrième troisième arbre (48) ; le second embrayage (B), mécaniquement relié au second arbre (48), étant fermé pour obtenir le quatrième mode de marche avant (IV).

6. Transmission à variation continue (CVT) selon l'une quelconque des revendications précédentes, **caractérisée en ce que,** lorsqu'un troisième pignon (33) de ladite première pluralité de pignons est solidaire avec le second premier arbre (24), le mouvement est transmis vers le différentiel (DIF) par l'intermédiaire d'un pignon fou (46) engrenant avec un troisième pignon (47) de ladite quatrième pluralité des pignons solidaires avec le quatrième arbre (48) ; le second embrayage (B), mécaniquement relié au quatrième arbre (48), étant fermé pour obtenir le mode de marche arrière (R).

7. Transmission à variation continue (CVT) selon la revendications 2 ou 6, **caractérisée en ce que** ledit premier pignon (31) du premier mode de marche avant (I) et ledit troisième pignon (33) du mode de marche arrière (R) sont connectables sélectivement au dit premier arbre (24), ledit premier arbre étant solidaire avec un porte-satellites (23) du mécanisme rotatif épicycloïdal (18).

8. Transmission à variation continue (CVT) selon la revendications 7, **caractérisée en ce que** ledit premier pignon (31) de ladite première pluralité de pignons, supporté par ledit premier arbre (24), engrène avec ledit premier pignon (34) de ladite troisième pluralité de pignons solidaires avec le troisième arbre (35), ledit troisième arbre (35) étant connecté mécaniquement au premier embrayage (A), et **en ce que** ledit troisième pignon (33) de ladite première pluralité de pignons, supporté par ledit premier arbre (24), engrène avec ledit pignon fou (46), ledit pignon fou (46) engrenant à son tour ledit troisième pignon (47) de ladite quatrième pluralité de pignons solidaires avec ledit quatrième arbre (48) mécaniquement connecté au second embrayage (B).

9. Transmission à variation continue (CVT) selon la revendications 8, **caractérisée en ce qu'**un basculement entre le premier mode de marche avant (I) et le mode de marche arrière (R) est obtenu en ouvrant l'un des premier et second embrayages (A, B) et en refermant l'autre.

10. Transmission à variation continue (CVT) selon l'une quelconque des revendications précédentes, **caractérisée en ce que** les premier et second arbres (24, 30) ont le même axe de symétrie longitudinal ; le second arbre (30) étant positionné à l'intérieur du premier, l'arbre creux (24).

11. Transmission à variation continue (CVT) selon la revendication 10, **caractérisée en ce que** le cinquième arbre (20), accouplé à la sortie d'un moteur à combustion interne (19) du véhicule, traverse le premier arbre creux (24) pour actionner un mécanisme de prise de force (PTO) éloigné.

12. Transmission à variation continue (CVT) selon l'une quelconque des revendications précédentes, **caractérisée en ce que** le réglage de la vitesse du véhicule à moteur est régulé par un bloc électronique (100) qui reçoit les signaux sélectionnés par un conducteur par l'intermédiaire d'un dispositif de commande (L) en fonction des paramètres mesurés au moyen d'un certain nombre de capteurs (Sn1-Sn11).

13. Transmission à variation continue (CVT) selon l'une quelconque des revendications précédentes, **caractérisée en ce que** ladite boîte de vitesses (53) est connectée au côté de sortie du dit mécanisme rotatif épicycloïdal (18), lesdits premier et second embrayages (A, B) étant situés au côté de sortie de la boîte de vitesses (53) au milieu de ladite boîte de vitesses (53) et du dit différentiel (DIF).
